# EUROPÄISCHE PATENTANMELDUNG

(11) **EP 4 822 390 A1**
(43) Veröffentlichungstag der Anmeldung: **14.10.2026**
(21) Anmeldenummer: 25169314.9
(22) Anmeldetag: 09.04.2025
(51) Int. Cl.: G01S 7/48, G01B 11/02, G01B 11/04, G01S 7/497, G01S 17/32, G01S 17/58, G01S 17/88

(54) **VORRICHTUNG UND VERFAHREN ZUR ÜBERWACHUNG EINES TRANSPORTPROZESSES MITTELS EINER FÖRDERVORRICHTUNG**

(71) Anmelder: SICK AG, 79183 Waldkirch (DE)
(72) Erfinder: WITTMEIER, Steffen, 79183 Waldkirch (DE); RUH, Dominic, 79102 Freiburg (DE)
(74) Vertreter: Manitz Finsterwald Patent- und Rechtsanwaltspartnerschaft mbB

(57) **Zusammenfassung**

Die Erfindung betrifft eine Vorrichtung zur Überwachung eines Transportprozesses mittels einer Fördervorrichtung, insbesondere Förderband, wobei die Vorrichtung zumindest einen optoelektronischen Sensor und eine Steuer- und Auswerteeinheit aufweist, wobei der Sensor dazu ausgebildet ist, Sendelicht in Form zumindest eines Sendelichtstrahlbündels auszusenden und von einem Objekt in Richtung des Sensors remittiertes oder reflektiertes Sendelicht als Empfangslicht zu empfangen, wobei die Steuer- und Auswerteeinheit dazu ausgebildet ist, auf Basis des Empfangslichts eine radiale Entfernung d_{rad} und eine Radialgeschwindigkeit v_{rad} des Objektes zu ermitteln, und wobei die Steuer- und Auswerteeinheit dazu ausgebildet ist, mittels der Radialgeschwindigkeit _{Vrad} und der radialen Entfernung d_{rad} des Objektes die orthogonale Entfernung dₒᵣₜₕ zwischen dem Sensor und dem Objekt zu bestimmen.

## Beschreibung

Die Erfindung betrifft eine Vorrichtung und ein Verfahren zur Überwachung eines Transportprozesses mittels einer Fördervorrichtung, insbesondere eines Förderbands.

Im Bereich der Logistik und Produktion stellt sich oft die Aufgabe, die Dicke von Objekten, welche mittels einer Fördervorrichtung, beispielsweise mittels eines Förderbands, transportiert werden, sowie deren Fördergeschwindigkeit zu messen. So kann die Geschwindigkeitsmessung genutzt werden, um durch zeitliche Integration die Länge des geförderten Objektes zu messen. Die Dickenmessung kann dagegen beispielsweise zur Qualitätskontrolle der geförderten Objekte eingesetzt werden.

Bekannte optische Sensoren zur hochgenauen Entfernungsmessung von geförderten Objekten nutzen beispielsweise interferometrische, konfokale, Triangulations- und Lichtlaufzeitverfahren, um die Entfernung zwischen Sensor und dem geförderten Objekt zu ermitteln. Hierbei lassen sich für die Lichtlaufzeitmessung wiederum direkte und indirekte Verfahren unterscheiden, wobei die direkten Verfahren gepulste Lichtlaufzeitmessverfahren und die indirekten Verfahren phasenkorrelationsbasierte Lichtlaufzeitmessverfahren umfassen. Die hochgenaue optische Geschwindigkeitsmessung basiert wiederum auf Verfahren, welche sich der Messung des Dopplereffekts via selbstmischender Interferometrie (self-mixing interferometry) bedienen.

Bekannte Sensoren sind jedoch nicht in der Lage, gleichzeitig die Geschwindigkeit und die Dicke von geförderten Objekten zu erfassen. Um beide Größen zu erhalten müssen deshalb üblicherweise mehrere Modalitäten des Sensors kombiniert werden. Zudem erfordern hochgenaue Entfernungssensoren eine aufwändige Montage und manuelle Ausrichtung des Sensors, um sicherzustellen, dass der Sensor orthogonal zur Fördervorrichtung ausgerichtet ist und somit die tatsächliche Dicke des geförderten Objektes gemessen wird.

Es ist daher eine Aufgabe der Erfindung, eine verbesserte Vorrichtung zum Überwachen eines Transportprozesses anzugeben, welche eine effizientere, genauere und kostengünstigere Überwachung ermöglicht und einfach zu installieren ist.

Die Aufgabe wird gemäß einem ersten Aspekt der Erfindung durch eine Vorrichtung mit den Merkmalen des Anspruchs 1 gelöst, und insbesondere dadurch, dass die Vorrichtung zumindest einen optoelektronischen Sensor und eine Steuer- und Auswerteeinheit aufweist, wobei der Sensor dazu ausgebildet ist, Sendelicht in Form zumindest eines Sendelichtstrahlbündels auszusenden und von einem Objekt in Richtung des Sensors remittiertes oder reflektiertes Sendelicht als Empfangslicht zu empfangen, wobei die Steuer- und Auswerteeinheit dazu ausgebildet ist, auf Basis des Empfangslichts eine radiale Entfernung d_{rad} und eine Radialgeschwindigkeit v_{rad} des Objektes zu ermitteln, und wobei die Steuer- und Auswerteeinheit dazu ausgebildet ist, mittels der Radialgeschwindigkeit v_{rad} und der radialen Entfernung d_{rad} des Objektes die orthogonale Entfernung dₒᵣₜₕ zwischen dem Sensor und dem Objekt zu bestimmen.

Die Vorrichtung ist insbesondere stationär oberhalb der Fördervorrichtung angeordnet. Sendelicht, welches in Form zumindest eines Sendelichtstrahlbündels zur Fördervorrichtung ausgesendet wird, wird von der Fördervorrichtung oder durch sie geförderte Objekte remittiert oder reflektiert und vom Sensor als Empfangslicht empfangen. Die Steuer- und Auswerteeinheit analysiert das Sendelicht und das Empfangslicht und ermittelt aus den erhaltenen Daten eine radiale Entfernung d_{rad} und eine Radialgeschwindigkeit v_{rad} des reflektierenden oder remittierenden Objektes, d.h. der Fördervorrichtung oder des geförderten Objektes.

Die radiale Entfernung d_{rad} entspricht jedoch im Allgemeinen nicht der orthogonalen Entfernung dₒᵣₜₕ zwischen dem Sensor und dem reflektierenden oder remittierenden Objekt, da eine genaue Bestimmung dieser Größe eine exakte orthogonale Ausrichtung des Sendelichtstrahlbündels und des Objekts erfordert. Insbesondere erfordert eine direkte Ermittlung der orthogonalen Entfernung dₒᵣₜₕ eines geförderten Objektes eine orthogonale Ausrichtung des Sendelichtstrahlbündels und einer Transportebene der Fördervorrichtung. Neben einer aufwändigen Installation hat die geforderte orthogonale Ausrichtung jedoch auch den Nachteil, dass bei dieser Konfiguration des Sensors eine Ermittlung der Radialgeschwindigkeit v_{rad}, welche beispielsweise für eine Längenmessung des Objektes benötigt wird, nicht mehr möglich ist.

Die Steuer- und Auswerteeinheit ist deshalb dazu ausgebildet ist, die orthogonale Entfernung dₒᵣₜₕ des Objektes indirekt aus der ermittelten Radialgeschwindigkeit v_{rad} und der radialen Entfernung d_{rad} des Objektes zu bestimmen. Hierdurch wird ermöglicht, gleichzeitig die Radialgeschwindigkeit v_{rad} und die orthogonale Entfernung dₒᵣₜₕ des Objektes zu bestimmen. So können durch eine einzige Messung genaue Werte der Radialgeschwindigkeit v_{rad} und der orthogonalen Entfernung dₒᵣₜₕ erhalten werden, wobei auf eine aufwändige Ausrichtung des Sensors oder des Sendelichtstrahlbündels verzichtet werden kann.

Die Vorrichtung ist somit einfach zu installieren und ermöglicht eine effizientere, genauere und kostengünstigere Überwachung des Transportprozesses.

Gemäß einer Ausführungsform bildet das Sendelichtstrahlbündel einen nicht-orthogonalen Winkel α zu einer Förderrichtung der Transportvorrichtung. Die Vorrichtung ist somit dazu ausgebildet, die Entfernung von geförderten Objekten auch unter einem Winkel zur Objektnormalen zu ermitteln und die orthogonale Entfernung dennoch genau zu berechnen. Eine aufwändige manuelle Kalibrierung der Ausrichtung des Sensors oder des Sendelichtstrahlbündels zur Herstellung der Orthogonalität im Rahmen der Installation und Inbetriebnahme ist somit nicht notwendig und kann entfallen.

Gemäß einer Ausführungsform ist die Steuer- und Auswerteeinheit dazu ausgebildet, auf Basis des Empfangslichts gleichzeitig die Radialgeschwindigkeit v_{rad,obj} und die Dicke D_{obj} eines durch die Fördervorrichtung geförderten Objektes zu bestimmen. Die nicht-orthogonale Ausrichtung des Sendelichtstrahlbündels ermöglicht es, neben der radialen Entfernung d_{rad,obj} gleichzeitig auch die radiale Geschwindigkeit v_{rad,obj} des geförderten Objektes zu ermitteln. Die aus der Radialgeschwindigkeit v_{rad,obj} und der radialen Entfernung d_{rad,obj} des geförderten Objektes bestimmte orthogonale Entfernung d_{orth,obj} zwischen dem Sensor und dem Objekt ermöglicht darüber hinaus, gleichzeitig die Dicke D_{obj} des geförderten Objektes zu bestimmen, was insbesondere im Rahmen der Qualitätskontrolle von Nutzen ist.

Gemäß einer Ausführungsform ist der Sensor ein Frequency-Modulated Continuous Wave (FMCW) LiDAR Sensor, insbesondere ein 1D FMCW-LiDAR Sensor. Im Gegensatz zu einem auf Lichtlaufzeitmessung von Laserpulsen basierenden LiDAR Sensor sendet ein FMCW LiDAR Sensor keine gepulsten, sondern kontinuierliche Sendelichtstrahlen aus, die während einer Messung eine vorgegebene Frequenzmodulation, das heißt eine zeitliche Änderung der Wellenlänge des Sendelichts, aufweisen. Die Messfrequenz liegt dabei typischerweise im Bereich von mehreren 10 kHz. Die Frequenzmodulation kann beispielsweise als periodische Auf- und Abwärtsmodulation ausgebildet sein. Von dem Objekt reflektiertes Sendelicht weist im Vergleich zum ausgesendeten Sendelicht einen Zeitversatz entsprechend der Lichtlaufzeit auf, die von der Entfernung des Objektes vom Sensor abhängt und aufgrund der Frequenzmodulation mit einer Frequenzverschiebung einhergeht. In einem FMCW LiDAR Sensor werden ausgesendetes und reflektiertes Sendelicht kohärent überlagert, wobei aus dem Überlagerungssignal die Entfernung des Objektes vom Sensor bestimmt werden kann. Diese kohärente Überlagerung hat im Vergleich zu gepulsten oder amplituden-modulierten inkohärenten LiDAR Messprinzipien unter anderem den Vorteil einer erhöhten Immunität bezüglich Fremdlicht von beispielsweise anderen optischen Sensoren oder der Sonne. Bewegt sich ein Objekt mit einer Radialgeschwindigkeit auf den Sensor zu oder vom Sensor weg, weist das reflektierte Sendelicht zusätzlich eine Dopplerverschiebung auf. Aus dieser Veränderung der Sendelichtfrequenz kann die Entfernung und die Radialgeschwindigkeit eines Messpunkts in einer einzigen Messung bestimmt werden, während bei einem auf Lichtlaufzeitmessung von Laserpulsen basierenden LiDAR Sensor für eine Bestimmung der Radialgeschwindigkeit zumindest zwei zeitlich beabstandete Messungen des gleichen Messpunktes nötig sind, wobei eine derartige Berechnung aufgrund des Messrauschens in der Regel sehr fehlerbehaftet sein kann. Bei bewegten Objekten, deren radialer Abstand zum Sensor sich nicht ändert, ist eine derartige Herleitung der Radialgeschwindigkeit überhaupt nicht durchführbar. Je nach Ausbildung der FCWM LiDAR Sensoren können diese Messdaten in einer oder auch mehreren Dimensionen erfassen. Bei der vorliegenden Vorrichtung ist eine mehrdimensionale Ausführung nicht notwendig. Der Sensor kann somit als 1D FCWM LiDAR Sensor ausgebildet sein, welcher neben der radialen Entfernung zu einem Auftreffpunkt des Sendelichtstrahlbündels auf dem Objekt auch dessen Radialgeschwindigkeit ermittelt.

Gemäß einer Ausführungsform ist die Steuer- und Auswerteeinheit dazu ausgebildet, die orthogonale Entfernung dₒᵣₜₕ des Objektes gemäß ${d}_{orth} = {d}_{rad} * sin \left(α\right) = {d}_{rad} * sin \left(arccos\left({v}_{rad}/v\right)\right)$ aus der radialen Entfernung d_{rad} des Objektes, der Radialgeschwindigkeit v_{rad} des Objektes und der Fördergeschwindigkeit v der Fördervorrichtung zu bestimmen. Das heißt, dass mit Hilfe der Messung der Radialgeschwindigkeit v_{rad} die Messung der radialen Entfernung d_{rad}, welche unter einem Winkel α zu einer Transportebene der Fördervorrichtung erfolgt, korrigiert werden kann und so bei bekannter Fördergeschwindigkeit v der Fördervorrichtung ein orthogonales Maß der Entfernung dₒᵣₜₕ zum Objekt erhalten wird. Dabei wird ausgenutzt, dass die Radialgeschwindigkeit v_{rad} die Projektion des Geschwindigkeitsvektors v des Objektes auf den Richtungsvektor des Sendelichtstrahlbündels darstellt, was sich durch cos(α)=v_{rad}/v ausdrücken lässt. Da gleichzeitig gilt, dass sich die orthogonale Entfernung dₒᵣₜₕ des Objektes gemäß dₒᵣₜₕ =d_{rad} * Sin(α) aus der ermittelten radialen Entfernung d_{rad} und dem Winkel α des Sendelichtstrahlbündels relativ zur Transportebene ergibt, lässt sich die orthogonale Entfernung dₒᵣₜₕ zu ${d}_{orth} = {d}_{rad} sin \left(arccos\left(\frac{{v}_{rad}}{v}\right)\right)$ berechnen.

Gemäß einer Ausführungsform ist die Vorrichtung dazu ausgebildet, bei Inbetriebnahme der mit einer, insbesondere einstellbaren, Fördergeschwindigkeit v betriebenen Fördervorrichtung eine Kalibrationsmessung durchzuführen, bei welcher mittels der ermittelten radialen Entfernung d_{rad,F} und der ermittelten Radialgeschwindigkeit v_{rad,F} einer Transportebene der Fördervorrichtung die orthogonale Entfernung d_{orth,F} der Transportebene bestimmt wird, wobei während der Kalibrationsmessung durch die Fördervorrichtung keine Objekte gefördert werden. Während der Kalibrationsmessung, d.h. dem "Teach-in" des Sensors wird die Fördervorrichtung auf die für den Transportbetrieb gewünschte Fördergeschwindigkeit v beschleunigt und mittels der Vorrichtung die Radialgeschwindigkeit v_{rad,F} bestimmt. Hierbei ist wichtig, dass kein Objekt auf der Fördervorrichtung befindlich ist, um eine Verfälschung der Messung durch einen möglichen Schlupf zwischen Objekt und Fördervorrichtung zu vermeiden und den tatsächlichen Referenzabstand zwischen dem Sensor und der Transportebene zu bestimmen. Die orthogonale Entfernung d_{orth,F} zwischen dem Sensor und der Transportebene ergibt sich aus den in der Kalibrationsmessung erhaltenen Werten zu ${d}_{orth , F} = {d}_{rad , F} sin \left(arccos\left(\frac{{v}_{rad , F}}{v}\right)\right) .$

Die Steuer- und Auswerteeinheit ist insbesondere dazu ausgebildet, die Kalibrationsmessung nach der Inbetriebnahme der Fördervorrichtung während des Normalbetriebs zu wiederholen, wobei während der Kalibrationsmessung keine Objekte durch die Fördervorrichtung gefördert werden. Der Sensor kann somit im laufenden Betrieb neu kalibriert werden. Hierfür muss lediglich die Geschwindigkeit v der Fördervorrichtung bekannt sein, um den Faktor v_{rad}/v berechnen zu können. Durch die wiederholten Kalibrationsmessungen können auch leichte Abweichungen von der ursprünglichen Montageposition des Sensors, die im laufenden Betrieb auftreten können, ausgeglichen bzw. identifiziert werden. **In** einer weiteren Ausprägung dieser Ausführungsform kann die Steuer- und Auswerteeinheit dazu ausgebildet sein, anhand einer Abstandsmessung zu bestimmen, ob Objekte durch die Fördervorrichtung gefördert werden, und die Kalibrationsmessung starten, wenn kein Objekt detektiert wird.

Gemäß einer Ausführungsform ist die Steuer- und Auswerteeinheit dazu ausgebildet, die radiale Entfernung d_{rad,obj} und die Radialgeschwindigkeit v_{rad,obj} eines durch die Fördervorrichtung mit der Fördergeschwindigkeit v geförderten Objektes zu ermitteln, aus den ermittelten Werten die orthogonale Entfernung d_{orth,obj} des Objektes zu bestimmen und die Dicke D_{obj} des Objektes gemäß D_{obj} = d_{orth,obj} - d_{orth,F} zu berechnen. Die orthogonale Entfernung d_{orth,obj} des geförderten Objektes ergibt sich aus den ermittelten Werten der radialen Entfernung d_{rad,obj} und der Radialgeschwindigkeit v_{rad,obj} des geförderten Objektes zu ${d}_{orth , obj} = {d}_{rad , obj} sin \left(arccos\left(\frac{{v}_{rad , obj}}{v}\right)\right) .$

Nachdem die orthogonale Entfernung des Sensors d_{orth,F} von einer Transportebene der Fördervorrichtung durch die Kalibrationsmessung bekannt ist, kann die Dicke D_{obj} des geförderten Objektes gemäß D_{obj} = d_{orth,obj} - d_{orth,F} berechnet werden. Somit kann mittels der Vorrichtung gleichzeitig die Dicke D_{obj} und die Radialgeschwindigkeit v_{rad,obj} eines durch die Fördervorrichtung geförderten Objektes mit großer Genauigkeit bestimmt werden.

Gemäß einer Ausführungsform ist die Steuer- und Auswerteeinheit dazu ausgebildet, die Länge L_{obj} eines durch die Fördervorrichtung mit der Fördergeschwindigkeit v geförderten Objektes durch zeitliche Integration der ermittelten Radialgeschwindigkeitswerte v_{rad,opj} des Objektes oder einer aus den ermittelten Radialgeschwindigkeitswerten v_{rad,obj} des Objektes abgeleiteten Objektgeschwindigkeit v_{obj} zu bestimmen. Bei schlupflosem Transport des Fördergutes gilt im Allgemeinen v=v_{obj}. Mit Hilfe der radialen Geschwindigkeit v_{rad,opj} kann somit die Länge L_{obj} des bereits geförderten Guts aufintegriert werden. Dies ist beispielsweise bei Folien, Papier und Holz als Fördergut relevant, da dadurch der Verschnitt optimiert, d.h. minimiert, werden kann.

Gemäß einer Ausführungsform entsprechen die radialen Entfernungen d_{rad} und Radialgeschwindigkeiten v_{rad} des Objektes jeweils einer Kombination von zeitlich hintereinander erfolgten diskreten Ermittlungen von radialer Entfernung und Radialgeschwindigkeit. Bei der Kombination der diskreten Ermittlungen kann es sich beispielsweise um die Bildung eines gewichteten oder ungewichteten Mittelwertes oder anderer geeigneter statistischer Größen handeln. Durch eine derartige Kombination der ermittelten Messwerte können statistische Fehler der Geschwindigkeits- und Entfernungsmessung korrigiert bzw. minimiert werden.

Gemäß einer Ausführungsform ist die Steuer- und Auswerteeinheit dazu ausgebildet, das Sendelichtstrahlbündel des Sensors orthogonal zur Transportebene der Fördervorrichtung auszurichten, indem der Sensor, insbesondere durch Verschwenken, zunächst derart ausgerichtet wird, dass die ermittelte Radialgeschwindigkeit v_{rad,F} der mit der Fördergeschwindigkeit v betriebenen Fördervorrichtung minimiert wird und der Sensor danach derart ausgerichtet wird, dass die Radialgeschwindigkeit v_{rad,F} minimal bleibt und gleichzeitig der ermittelte radiale Abstand d_{rad,F} der Transportebene minimiert wird. Die Radialgeschwindigkeit ist null, wenn der Geschwindigkeitsvektor eines reflektierenden oder remittierenden Objektes und das Sendelichtstrahlbündel senkrecht zueinanderstehen. Diese Bedingung kann ausgenutzt werden, um das Sendelichtstrahlbündel senkrecht zu der Transportebene auszurichten. Dabei wird in einem ersten Schritt das Sendelichtstrahlbündel so ausgerichtet, dass die Radialgeschwindigkeitsmessung v_{rad} zur Transportebene minimiert wird. In einem zweiten Schritt wird das Sendelichtstrahlbündel nun so ausgerichtet, dass die Radialgeschwindigkeit v_{rad} weiterhin minimal bleibt, gleichzeitig aber auch die radiale Entfernungsmessung d_{rad} zur Transportebene minimiert wird. Sind beide Bedingungen erfüllt, ist das Sendelichtstrahlbündel optimal orthogonal zur Transportebene ausgerichtet und die orthogonale Entfernung d_{orth,obj} eines geförderten Objektes kann direkt ermittelt werden und die Dicke D_{obj} des Objektes genau bestimmt werden. Eine Geschwindigkeitsmessung des Objektes ist in diesem Fall jedoch nicht mehr möglich.

Gemäß einer Ausführungsform ist der Sensor dazu ausgebildet, Sendelicht in Form von zumindest zwei Sendelichtstrahlbündeln auszusenden, wobei sich die jeweiligen Winkel der Sendelichtstrahlbündel zu einer Förderrichtung der Transportvorrichtung unterscheiden. Die Erweiterung der Vorrichtung um zusätzliche Sendelichtstrahlbündel ermöglicht insbesondere, die Ausrichtung des Sensors in mehreren Rotationsebenen direkt zu bestimmen. Der Sensor kann bevorzugt derart ausgerichtet werden, dass eine sich im Wesentlichen senkrecht zur Transportebene erstreckende Achse in einer durch die zwei Sendelichtstrahlbündel aufgespannten Ebene liegt. Dann lässt sich die orthogonale Entfernung d_{orth,F} der Transportebene vom Sensor durch einfache geometrische Überlegungen bestimmen, da in diesem Fall die Sendelichtstrahlbündel und die Gerade zwischen den Auftreffpunkten der Sendelichtstrahlbündel auf der Transportebene ein Dreieck bilden, wobei eine Höhe des Dreiecks der orthogonalen Entfernung d_{orth,F} der Transportebene vom Sensor entspricht, die sich aus den Seitenlängen des Dreiecks berechnen lässt.

Gemäß einer bevorzugten Variante der vorgenannten Ausführungsform ist die Vorrichtung dazu ausgebildet, Sendelicht in Form von zwei Sendelichtstrahlbündeln auszusenden und auf Basis des jeweiligen empfangenen Empfangslichts jeweilige radiale Entfernungen d1_{rad,F}, d2_{rad,F} und Radialgeschwindigkeiten v1_{rad,F}, v2_{rad,F} einer Transportebene der mit der Fördergeschwindigkeit v betriebenen Fördervorrichtung zu ermitteln und den Sensor durch Verschwenken um eine im Wesentlichen senkrecht zur Transportebene sich erstreckende Achse derart auszurichten, dass die Radialgeschwindigkeiten v1_{rad,F} und v2_{rad,F} maximiert werden und jeweiligen Maximalwerten v1_{rad,F,max} und v2_{rad,F,max} entsprechen, wobei die Steuer- und Auswerteeinheit dazu ausgebildet ist, zunächst die kartesischen 3D-Koordinaten der Auftreffpunkte *̅P̅*̅_̅{̅*̅h̅l̅t̅*̅1̅}̅ und *̅P̅*̅_̅{̅*̅h̅l̅t̅*̅2̅}̅ der zwei Sendelichtstrahlbündel auf der Transportebene im Koordinatensystem des Sensors durch Multiplikation der radialen Entfernungen d1_{rad,F}, d2_{rad,F} mit den Einheitsvektoren *̅B̅*̅₁̅ und *̅B̅*̅₂̅ der Sendelichtstrahlbündel zu bestimmen und anschließend die euklidische Distanz dHits von *̅P̅*̅_̅{̅*̅H̅l̅t̅*̅1̅}̅ und *̅P̅*̅_̅{̅*̅H̅l̅t̅*̅2̅}̅, also den Abstand zwischen den beiden Auftreffpunkten, gemäß $dHits = \sqrt{{\left(\vec{{P}_{Hιt 1}}-\vec{{P}_{Hιt 2}}\right)}^{2}} ,$ mit $\vec{{P}_{Hιt 1}} = \vec{{B}_{1}} ⋅ d {1}_{rad , F}$ $\vec{{P}_{Hit 2}} = \vec{{B}_{2}} ⋅ d {2}_{rad , F}$ zu berechnen, wobei d1_{rad,F} und d2_{rad,F} die den Radialgeschwindigkeiten v1_{rad,F,max} und v2_{rad,F,max} zugehörigen radialen Entfernungen der Transportebene entsprechen. dHits, d1_{rad,F} und d2_{rad,F} bilden die Kantenlängen eines Dreiecks, dessen Höhe die orthogonale Entfernung d_{orth,F} der Transportebene vom Sensor repräsentiert, die direkt berechnet werden kann. Dementsprechend ist die Steuer- und Auswerteeinheit dazu ausgebildet, die orthogonale Entfernung d_{orth,F} der Transportebene vom Sensor gemäß ${d}_{orth , F} = \frac{2}{dHits} ⋅ \sqrt{s ⋅ \left(s-d{1}_{rad , F}\right) ⋅ \left(s-d{2}_{rad , F}\right) ⋅ \left(s-dHits\right)} ,$ mit $s = 0.5 ⋅ \left(d{1}_{rad , F}+d{2}_{rad , F}+dHits\right)$ zu berechnen.

Die Ausführung mit zwei Sendelichtstrahlbündeln ermöglicht wiederum eine iterative Vorgehensweise, wobei die ermittelten Radialgeschwindigkeiten v1_{rad,F} und v2_{rad,F} der beiden Sendelichtstrahlbündel durch Verschwenken des Sensors bezüglich einer im Wesentlichen senkrecht zur Transportebene sich erstreckenden Achse maximiert werden. Mit diesem Ausrichteschritt kann der Sensor derart ausgerichtet werden, dass die durch die Sendelichtstrahlbündel aufgespannte Ebene parallel zur Förderrichtung angeordnet ist. Ein zusätzlicher Schritt zur nachfolgenden Minimierung der ermittelten Werte der radialen Entfernung d1_{rad} und d2_{rad} ist nicht mehr notwendig, da durch die beiden nun parallel zur Förderrichtung erfolgten Entfernungsmessungen d1_{rad,F} und d2_{rad,F} die orthogonale Entfernung d_{orth,F} der Transportebene direkt berechnet werden kann.

Alternativ zur letztgenannten Ausführungsform ist die Vorrichtung dazu ausgebildet, Sendelicht in Form von zwei Sendelichtstrahlbündeln auszusenden und auf Basis des jeweiligen empfangenen Empfangslichts jeweilige radiale Entfernungen d1_{rad,F}, d2_{rad,F} und Radialgeschwindigkeiten v1_{rad,F}, V2_{rad,F} einer Transportebene der mit der Fördergeschwindigkeit v betriebenen Fördervorrichtung zu ermitteln und den Sensor durch Verschwenken um eine im Wesentlichen senkrecht zur Transportebene sich erstreckende Achse derart auszurichten, dass die Radialgeschwindigkeiten v1_{rad,F} und v2_{rad,F} minimiert werden und jeweiligen Minimalwerten v1_{rad,F,min} und v2_{rad,F,min} entsprechen, wobei die Steuer- und Auswerteeinheit dazu ausgebildet ist, zunächst die kartesischen 3D-Koordinaten der Auftreffpunkte *̅P̅*̅_̅{̅*̅h̅l̅t̅*̅1̅}̅ und *̅P̅*̅_̅{̅*̅h̅l̅t̅*̅2̅}̅ der zwei Sendelichtstrahlbündel auf dem Förderband im Koordinatensystem des Sensors durch Multiplikation der radialen Entfernungen d1_{rad,F}, d2_{rad,F} mit den Einheitsvektoren *̅B̅*̅₁̅ und *B*₂ der Sendelichtstrahlbündel zu bestimmen und anschließend die euklidische Distanz dHits von *̅P̅*̅_̅{̅*̅H̅l̅t̅*̅1̅}̅ und *̅P̅*̅_̅{̅*̅H̅l̅t̅*̅2̅}̅, also den Abstand zwischen den beiden Auftreffpunkten, gemäß $dHits = \sqrt{{\left(\vec{{P}_{Hιt 1}}-\vec{{P}_{Hιt 2}}\right)}^{2}} ,$ mit $\vec{{P}_{Hιt 1}} = \vec{{B}_{1}} ⋅ {d 1}_{rad , F}$ $\vec{{P}_{Hιt 2}} = \vec{{B}_{2}} ⋅ {d 2}_{rad , F}$ zu berechnen, wobei d1_{rad,F} und d2_{rad,F} die den Radialgeschwindigkeiten v1_{rad,F,min} und v2_{rad,F,min} zugehörigen radialen Entfernungen der Transportebene entsprechen. dHits, d1_{rad,F} und d2_{rad,F} bilden die Kantenlängen eines Dreiecks, dessen Höhe die orthogonale Entfernung d_{orth,F} der Transportebene vom Sensor repräsentiert, die direkt berechnet werden kann. Dementsprechend ist die die Steuer- und Auswerteeinheit dazu ausgebildet, die orthogonale Entfernung d_{orth,F} der Transportebene vom Sensor gemäß ${d}_{orth , F} = \frac{2}{dHits} ⋅ \sqrt{s ⋅ \left(s-{d 1}_{rad , F}\right) ⋅ \left(s-{d 2}_{rad , F}\right) ⋅ \left(s-dHits\right)} ,$ mit $s = 0.5 ⋅ \left({d 1}_{rad , F}+{d 1}_{rad , F}+dHits\right)$

Die Ausführung mit zwei Sendelichtstrahlbündeln ermöglicht wiederum eine iterative Vorgehensweise, wobei die ermittelten Radialgeschwindigkeiten v1_{rad,F} und v2_{rad,F} der beiden Sendelichtstrahlbündel durch Verschwenken des Sensors bezüglich einer im Wesentlichen senkrecht zur Transportebene sich erstreckenden Achse minimiert werden. Mit diesem Ausrichteschritt kann der Sensor derart ausgerichtet werden, dass die durch die Sendelichtstrahlbündel aufgespannte Ebene senkrecht zur Förderrichtung angeordnet ist. Ein zusätzlicher Schritt zur nachfolgenden Minimierung der ermittelten Werte der radialen Entfernung d1_{rad} und d2_{rad} ist nicht mehr notwendig, da durch die beiden nun senkrecht zur Förderrichtung erfolgten Entfernungsmessungen d1_{rad,F} und d2_{rad,F} die orthogonale Entfernung d_{orth,F} der Transportebene direkt berechnet werden kann

Gemäß einer Ausführungsform ist die Vorrichtung dazu ausgebildet, Sendelicht in Form von drei Sendelichtstrahlbündeln auszusenden und auf Basis des jeweiligen empfangenen Empfangslichts radiale Entfernungen d_{rad,F} und Radialgeschwindigkeiten v_{rad,F} einer Transportebene der Fördervorrichtung zu ermitteln, wobei die Steuer- und Auswerteeinheit dazu ausgebildet ist, aus den drei ermittelten radialen Entfernungen d_{rad,F} der Transportebene die Ausrichtung der Transportebene im dreidimensionalen Raum und/oder deren Normalenvektor zu berechnen. Aus den ermittelten jeweiligen radialen Entfernungen der Transportebene können die Raumkoordinaten der drei Auftreffpunkte der Sendelichtstrahlbündel auf der Transportebene bestimmt werden, wodurch die räumliche Anordnung der Transportebene relativ zum Sensor und den Sendelichtstahlbündeln festgelegt ist.

Gemäß einer Ausführungsform ist die Steuer- und Auswerteeinheit dazu ausgebildet, den orthogonalen Abstand d_{orth,F} des Sensors von der Transportebene und die Dicke D_{obj} eines geförderten Objektes ausschließlich aus den ermittelten radialen Entfernungen des Sensors zur Transportebene und zum geförderten Objekt zu berechnen. Eine Ausführung des Sensors mit drei Sendelichtstrahlbündeln ermöglicht es, direkt die räumliche Anordnung der Transportebene und deren Normalenvektor zu bestimmen und so die Entfernung des Sensors zur Transportebene zu berechnen. In diesem Falle ist eine Messung der Radialgeschwindigkeit eines geförderten Objektes für die Bestimmung der orthogonalen Entfernung d_{orth,obj} und der Dicke D_{obj} nicht erforderlich.

Die Aufgabe wird gemäß einem zweiten Aspekt der Erfindung weiterhin durch ein Verfahren zur Überwachung eines Transportprozesses mittels einer Fördervorrichtung, insbesondere eines Förderbands, durch eine Vorrichtung gelöst, wobei die Vorrichtung zumindest einen optoelektronischen Sensor und eine Steuer- und Auswerteeinheit aufweist, wobei der Sensor Sendelicht in Form zumindest eines Sendelichtstrahlbündels aussendet und von einem Objekt in Richtung des Sensors remittiertes oder reflektiertes Sendelicht als Empfangslicht empfängt, die Steuer- und Auswerteeinheit auf Basis des Empfangslichts eine radiale Entfernung d_{rad} und eine Radialgeschwindigkeit v_{rad} des Objektes ermittelt, und wobei die Steuer- und Auswerteeinheit mittels der Radialgeschwindigkeit v_{rad} und der radialen Entfernung d_{rad} des Objektes die orthogonale Entfernung dₒᵣₜₕ zwischen dem Sensor und dem Objekt bestimmt.

Das erfindungsgemäße Verfahren kann mittels der erfindungsgemäßen Vorrichtung oder einer ihrer Ausführungsformen durchgeführt werden. Die Ausführungen zu der Vorrichtung und zu den Ausführungsformen gelten entsprechend.

Die Erfindung wird nachfolgend lediglich beispielhaft anhand der Figuren erläutert.
Fig. 1 zeigt eine Ausführungsform einer erfindungsgemäßen Vorrichtung zur Überwachung eines Transportprozesses in einer schematischen Darstellung,
Fig. 2 zeigt eine schematische Visualisierung einer 3D Simulation zur Bestimmung der Genauigkeit der orthogonalen Entfernungsmessung mittels der Ausführungsform der Fig.1,
Fig. 3A und 3B zeigen Analysediagramme der Ergebnisse der Simulation der Fig. 2,
Fig. 4a zeigt eine Ausführungsform einer erfindungsgemäßen Vorrichtung mit zwei Sendelichtstrahlbündeln, und
Fig. 4b zeigt ein Beispiel zur Berechnung der orthogonalen Entfernung zwischen Sensor und Transportebene in einer Ausführungsform einer erfindungsgemäßen Vorrichtung mit zwei Sendelichtstrahlbündeln
Fig. 5 zeigt eine Ausführungsform einer erfindungsgemäßen Vorrichtung mit drei Sendelichtstrahlbündeln.

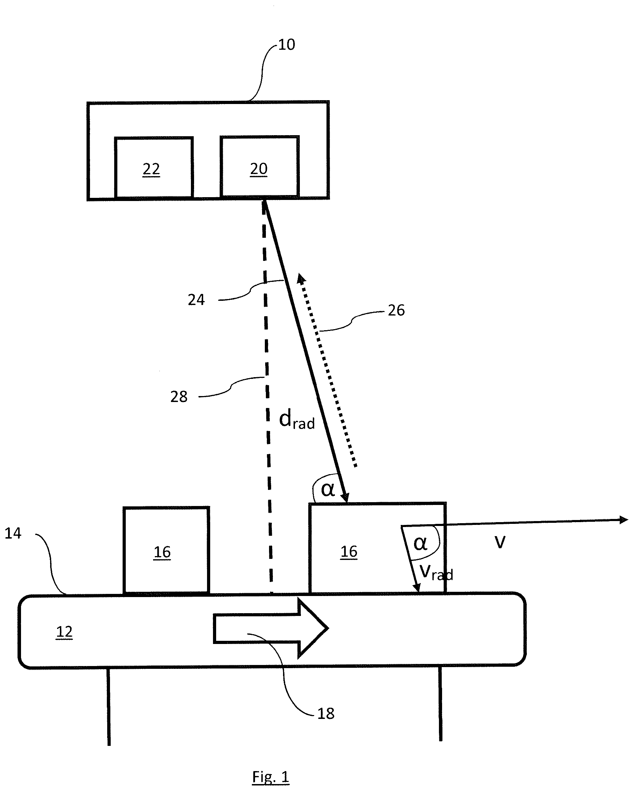

Fig. 1 zeigt eine Ausführungsform einer erfindungsgemäßen Vorrichtung 10 zur Überwachung eines Transportprozesses in einer schematischen Darstellung. Die Vorrichtung ist oberhalb eines Förderbands 12 stationär angeordnet, auf welchem mehrere Objekte 16, beispielsweise Waren oder Pakete, in Förderrichtung 18 bewegt werden.

Die Vorrichtung 10 weist einen optoelektronischen Sensor 20 und eine Steuer- und Auswerteeinheit 22 auf. Der Sensor ist ein 1D Frequency-Modulated Continuous Wave (FMCW) LiDAR Sensor und dazu ausgebildet, Sendelicht 24 in Form eines auf das Förderband 12 gerichteten Sendelichtstrahlbündels auszusenden und von einem geförderten Objekt 16 oder dem Förderband 12 in Richtung des Sensors 20 remittiertes oder reflektiertes Sendelicht als Empfangslicht 26 zu empfangen. Hierbei wird das Sendelicht derart ausgesendet, dass das Sendelichtstrahlbündel 24 einen Winkel α zur Förderrichtung 18 des Förderbandes 12 bildet, welches eine Transportebene 14 der Fördervorrichtung bildet. Die Förderrichtung 18 des Förderbands 12 ist der Fig. 1 durch einen Pfeil veranschaulicht. Die Steuer- und Auswerteeinheit 22 ist dazu ausgebildet, auf Basis des Empfangslichts 26 eine radiale Entfernung d_{rad} und eine Radialgeschwindigkeit v_{rad} der Objekte 16 zu ermitteln, sobald diese auf dem Förderband 12 das Sendlichtstrahlbündel 24 des Sensors 20 passieren.

Die Steuer- und Auswerteeinheit 22 ist weiterhin dazu ausgebildet, die orthogonale Entfernung d_{orth,obj} der Objekte 16 gemäß ${d}_{orth , obj} = {d}_{rad , obj} * sin \left(α\right) = {d}_{rad , obj} * sin \left(arccos\left({v}_{rad , obj}/v\right)\right)$ aus der ermittelten radialen Entfernung d_{rad,obj} der Objekte 16, der ermittelten Radialgeschwindigkeit v_{rad,obj} der Objekte 16 und der bekannten Fördergeschwindigkeit v des Förderbands 12 zu bestimmen.

Aus den ermittelten Werten der radialen Entfernung d_{rad,obj} und der Radialgeschwindigkeit v_{rad,opj} der Objekte 16 bestimmt die Steuer- und Auswerteeinheit 22 die orthogonale Entfernung d_{orth,obj} und die Dicke D_{obj} der Objekte gemäß D_{obj} = d_{orth,obj} - d_{orth,F}, wobei d_{orth,F} der orthogonalen Entfernung zwischen den Sensor 20 und der Transportebene 14 entspricht. Somit kann mittels der Vorrichtung 10 gleichzeitig die Dicke D_{obj} und die Radialgeschwindigkeit v_{rad,opj} der geförderten Objekte 16 mit großer Genauigkeit bestimmt werden. Durch zeitliche Integration der radialen Geschwindigkeit v_{rad,obj} oder einer aus den ermittelten Radialgeschwindigkeitswerten v_{rad,obj} des Objektes 16 abgeleiteten Objektgeschwindigkeit v_{obj} kann darüber hinaus die Länge L_{obj} der geförderten Objekte 16 ermittelt werden. Dies ist beispielsweise bei Folien, Papier und Holz als Fördergut relevant, da dadurch der Verschnitt optimiert, d.h. minimiert, werden kann.

Die radialen Entfernungen d_{rad,obj} und Radialgeschwindigkeiten v_{rad,obj} der Objekte 16 können hierbei jeweils einer Kombination von zeitlich hintereinander erfolgten diskreten Ermittlungen von radialer Entfernung und Radialgeschwindigkeit entsprechen. Bei der Kombination der diskreten Ermittlungen kann es sich beispielsweise um die Bildung von gewichteten oder ungewichteten Mittelwerten oder anderer geeigneter statistischer Größen handeln. Durch die zeitliche Integration der ermittelten Messwerte können statistische Fehler der Geschwindigkeits- und Entfernungsmessung korrigiert bzw. minimiert werden, um die Genauigkeit der Messungen weiter zu erhöhen.

Die orthogonale Entfernung d_{orth,F} zwischen den Sensor 20 und der Transportebene 14 kann beispielsweise durch eine Kalibrationsmessung bei Inbetriebnahme der Vorrichtung 10 ermittelt werden. Bei einem derartigen "Teach-in" des Sensors 20 wird das Förderband 12 auf die für den Förderbetrieb gewünschte Fördergeschwindigkeit v beschleunigt und mittels der Vorrichtung 10 die Radialgeschwindigkeit v_{rad,F} der Förderbands 12 bestimmt. Hierbei ist wichtig, dass sich kein Objekt auf dem Förderband 12 befindet, um eine Verfälschung der Messung durch einen möglichen Schlupf zwischen Objekt und Förderband 12 zu vermeiden und den tatsächlichen Referenzabstand zwischen dem Sensor 20 und der Transportebene 14 zu bestimmen. Insbesondere kann die Kalibrationsmessung nach der Inbetriebnahme der Fördervorrichtung 12 während des Normalbetriebs wiederholt werden, wobei das Förderband 12 während der Kalibrationsmessung wiederum frei von Objekten gehalten wird. Der Sensor 20 kann somit unaufwändig neu kalibriert werden, um leichte Abweichungen von der ursprünglichen Montageposition des Sensors 20, die im laufenden Betrieb auftreten können, auszugleichen.

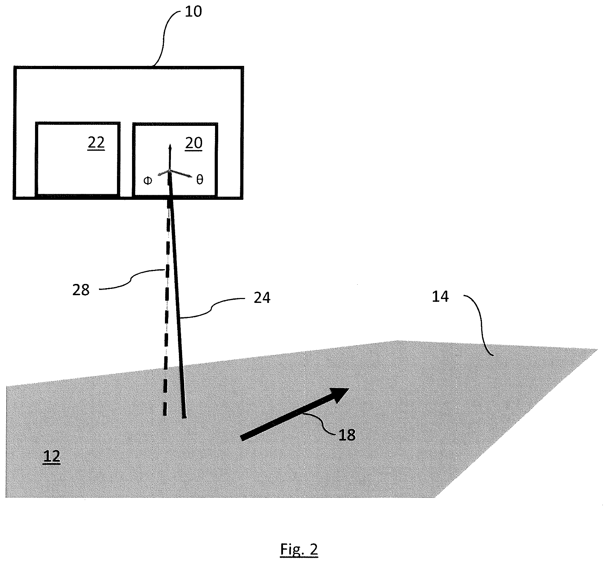

Die Genauigkeit der durch der Vorrichtung 10 erzielbaren Bestimmungen der orthogonalen Entfernung d_{orth,F} einer Transportebene 14 eines Förderbands 12 wurde mit Hilfe einer 3D Simulation validiert. Eine Visualisierung dieser 3D Simulation ist beispielhaft in Fig. 2 gezeigt, wobei die graue Fläche die Transportebene 14 beschreibt und das Koordinatensystem die Position des Sensors 20 über der Transportebene 14 darstellt. Die Förderrichtung 18 des Förderbands 12 ist in der Fig. 2 durch einen Pfeil dargestellt. Der Sensor 20 sendet ein durch eine durchgezogene Linie dargestelltes Sendelichtstahlbündel 24 aus, welches nicht entlang der durch eine gestrichelte Linie dargestellten Lotrechten 28 vom Sensor 20 auf die Transportebene 14 ausgesendet wird.

Mit Hilfe dieser Simulation wurde die Genauigkeit der Entfernungsmessung nun für verschiedene Ausrichtungen des Sensors untersucht. Hierzu wurde der Sensor 20 und das Sendelichtstrahlbündel 24 um einen Winkel θ um eine Achse, die in der Transportebene 14 senkrecht zur Förderrichtung 18 liegt, bzw. um einen Winkel Φ um eine Achse parallel zur Förderrichtung 18 rotiert. Für die jeweiligen Werte der Rotationswinkel θ und Φ des Sensors 20 und des Sendelichtstrahlbündels 24 wurde die radiale Entfernung d_{rad} und die Radialgeschwindigkeit v_{rad} der Transportebene 14 ermittelt und die Entfernungsmessung korrigiert, um den Wert der orthogonalen Entfernung dₒᵣₜₕ zu erhalten.

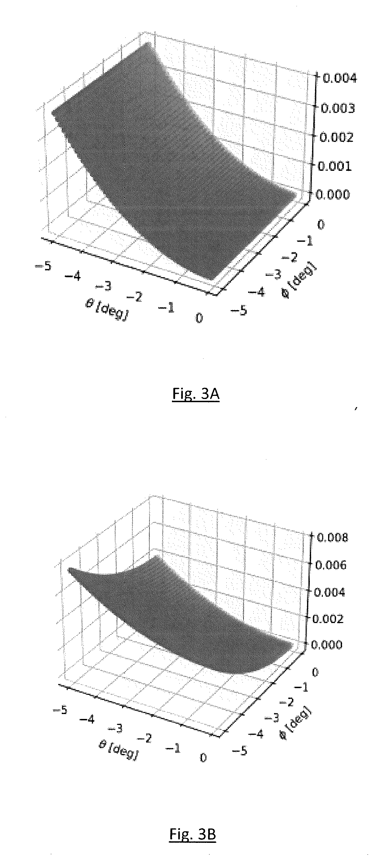

Fig. 3A zeigt als Ergebnis der Simulation der Fig. 2 den Fehler in Metern der bestimmten orthogonalen Entfernung der Transportebene 14 des Förderbands 12 für Rotationen des Sendlichtstrahlbündels 24 um verschiedene Werte von θ und Φ. Wie in Fig. 3A zu erkennen ist, entspricht für θ=0° der Fehler nach der Korrektur 0 m. Das heißt, dass bei dieser Anordnung des Sensors 20 und des Sendelichtstrahlbündels 24 die Entfernungsmessung optimal korrigiert werden kann. Ist das Sendelichtstrahlbündel 24 jedoch auch um den Winkel Φ verkippt, so steigt der Fehler in diesem Beispiel auf maximal 0.004m an, wobei Φ maximal auf 5° verkippt wurde. Größere Verkippungen bzw. Verschwenkungen des Sensors 20 und des Sendelichtbündels 24 sollten durch einen sichtbaren deckungsgleichen Markierungslaser im 1D FMCW LiDAR mechanisch korrigiert werden.

Fig. 3B zeigt zum Vergleich die Fehlerwerte für einen Entfernungssensor nach dem Stand der Technik, der nicht dazu ausgebildet ist, eine Korrektur der Entfernungsmessung durchzuführen, um die orthogonale Entfernung zu bestimmen. Ohne die erfindungsgemäße Korrektur der radialen Entfernungswerte steigt der Fehler sowohl bei einer Rotation um θ als auch bei einer Rotation um Φ direkt an und erreicht einen maximalen Wert von 0.008 m.

Die Vorrichtung 10 ist somit dazu ausgebildet, die Entfernung von geförderten Objekten 16 auch unter einem nicht-orthogonalen Winkel zur Objektnormalen zu ermitteln und die orthogonale Entfernung dₒᵣₜₕ dennoch mit hoher Genauigkeit zu bestimmen. Eine aufwändige manuelle Kalibrierung der Ausrichtung des Sensors 20 und des Sendelichtstrahlbündels 24 zur Herstellung der Orthogonalität im Rahmen der Montage und Inbetriebnahme ist somit nicht notwendig und kann entfallen. Die Vorrichtung 10 ermöglicht somit eine effiziente, genaue und kostengünstige Überwachung und ist darüber hinaus einfach zu installieren.

Ist für die Überwachung des Transportprozesses eine Bestimmung der Radialgeschwindigkeit und der Länge des geförderten Objektes 16 nicht erforderlich, so kann das Sendelichtstrahlbündel 24 mittels eines einfachen Verfahrens, insbesondere durch ein Verschwenken des Sensors 20, senkrecht zu der Transportebene 14 ausgerichtet werden, um die orthogonale Entfernung d_{orth,obj} des geförderten Objektes 16 und dessen Dicke D_{obj} in direkter Weise genau zu bestimmen. Dabei wird in einem ersten Schritt das Sendelichtstrahlbündel 24 derart ausgerichtet, dass die Radialgeschwindigkeitsmessung v_{rad} zur Transportebene 14 minimiert wird. In einem zweiten Schritt wird das Sendelichtstrahlbündel 24 nun derart ausgerichtet, dass die Radialgeschwindigkeit v_{rad} weiterhin minimal bleibt, gleichzeitig aber auch die radiale Entfernungsmessung d_{rad} zur Transportebene 14 minimiert wird. Sind beide Bedingungen erfüllt, ist das Sendelichtstrahlbündel 24 optimal orthogonal zur Transportebene 14 ausgerichtet und die orthogonale Entfernung d_{orth,obj} eines geförderten Objektes 16 kann direkt ermittelt werden.

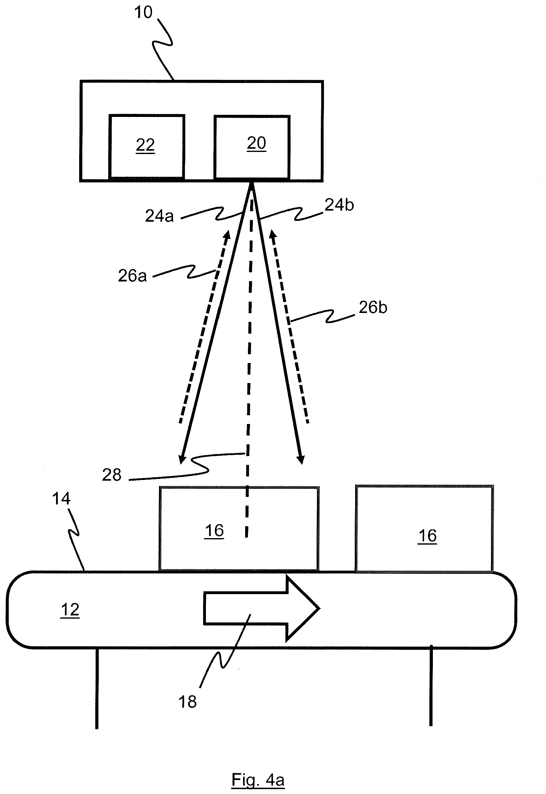

Fig. 4a zeigt eine weitere Ausführungsform der erfindungsgemäßen Vorrichtung 10, welche sich von der Ausführungsform der Fig. 1 dadurch unterscheidet, dass der Sensor 20 zwei Sendlichtstrahlbündel 24a, 24b aussendet, wobei sich die jeweiligen Winkel der Sendelichtstrahlbündel 24a, 24b zu einer Förderrichtung 18 der Transportvorrichtung 12 unterscheiden. Bei einer Ausführung mit zwei Sendelichtstrahlbündeln 24a, 24b kann wiederum iterativ vorgegangen werden, um durch Ausrichten des Sensors 20 die ermittelten Radialgeschwindigkeiten v1_{rad,F} und v2_{rad,F} der beiden Sendelichtstrahlbündel 24a, 24b zu maximieren oder zu minimieren. Ein weiterer Schritt zur nachfolgenden Minimierung der ermittelten Werte der radialen Entfernung d1_{rad} und d2_{rad} ist nicht mehr notwendig, da wie oben beschrieben, durch die 2 vorliegenden Entfernungsmessungen d1_{rad,F} und d2_{rad,F} die orthogonale Entfernung d_{orth,F} der Transportebene 14 berechnet werden kann.

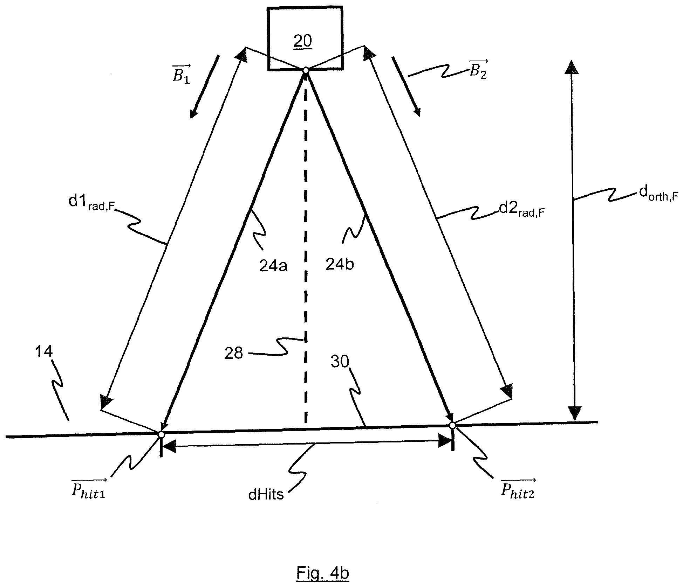

Dies wird in Figur 4b verdeutlicht. Sind die ermittelten Radialgeschwindigkeiten v1_{rad,F} und v2_{rad,F} der beiden Sendelichtstrahlbündel 24a, 24b maximiert oder minimiert, liegt die sich im Wesentlichen senkrecht zur Transportebene 14 erstreckende Achse 28 in einer durch die zwei Sendelichtstrahlbündel 24a, 24b aufgespannten Ebene, in diesem Beispiel die Zeichenebene. Die Sendelichtstrahlbündel 24a, 24b und die Gerade 30 zwischen den Auftreffpunkten *̅P̅*̅_̅{̅*̅h̅l̅t̅*̅1̅}̅,̅ *̅P̅*̅_̅{̅*̅h̅l̅t̅*̅2̅}̅ der Sendelichtstrahlbündel 24a, 24b auf der Transportebene 14 bilden ein Dreieck, wobei eine Höhe des Dreiecks der orthogonalen Entfernung d_{orth,F} des Sensors 20 von der Transportebene 14 entspricht. Die Auftreffpunkte *̅P̅*̅_̅{̅*̅h̅l̅t̅*̅1̅}̅ und *̅P̅*̅_̅{̅*̅h̅l̅t̅*̅2̅}̅ der zwei Sendelichtstrahlbündel 24a, 24b auf der Transportebene 14 lassen sich im Koordinatensystem des Sensors 20 durch Multiplikation der radialen Entfernungen d1_{rad,F}, d2_{rad,F} mit den Einheitsvektoren *̅B̅*̅₁̅ und *̅B̅*̅₂̅ der Sendelichtstrahlbündel 24a, 24b bestimmen. Anschließend kann die euklidische Distanz dHits, also die Länge der Gerade 30 zwischen den Auftreffpunkten *̅P̅*̅_̅{̅*̅h̅l̅t̅*̅1̅}̅ und *̅P̅*̅_̅{̅*̅h̅l̅t̅*̅2̅}̅ berechnet werden. Die Höhe des Dreiecks, also die orthogonale Entfernung d_{orth,F} des Sensors 20 von der Transportebene 14 ergibt sich dann wie oben beschrieben aus: ${d}_{orth , F} = \frac{2}{dHits} ⋅ \sqrt{s ⋅ \left(s-{d 1}_{rad , F}\right) ⋅ \left(s-{d 2}_{rad , F}\right) ⋅ \left(s-dHits\right)} ,$ mit $s = 0.5 ⋅ \left({d 1}_{rad , F}+{d 1}_{rad , F}+dHits\right) .$

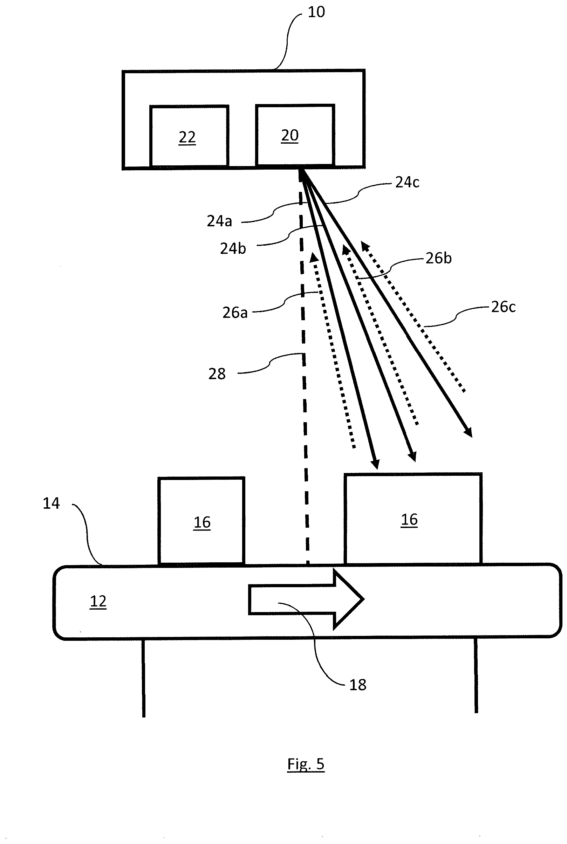

Fig. 5 zeigt eine weitere Ausführungsform der erfindungsgemäßen Vorrichtung 10, welche sich von der Ausführungsform der Fig. 1 dadurch unterscheidet, dass der Sensor 20 drei Sendlichtstrahlbündel 24a, 24b, 24c aussendet, wobei sich die jeweiligen Winkel der Sendelichtstrahlbündel 24a, 24b, 24c zu einer Förderrichtung 18 der Transportvorrichtung 12 unterscheiden. Eine Ausführung des Sensors 20 mit drei Sendelichtstrahlbündeln 24a, 24b, 24c ermöglicht es, direkt die Ausrichtung Transportebene 14 und deren Normalenvektor zu berechnen und so die Entfernung des Sensors 20 zur Transportebene 14 zu bestimmen. In diesem Falle ist eine Messung der Radialgeschwindigkeit v_{rad,obj} eines geförderten Objektes 16 für die Bestimmung der orthogonalen Entfernung d_{orth,obj} und der Dicke D_{obj} nicht erforderlich.

### Bezugszeichen

- 10: Vorrichtung zur Überwachung eines Transportprozesses
- 12: Förderband
- 14: Transportebene
- 16: Objekt
- 18: Förderrichtung
- 20: optoelektronischer Sensor
- 22: Steuer- und Auswerteeinheit
- 24: Sendelicht
- 24a: Sendelicht
- 24b: Sendelicht
- 24c: Sendelicht
- 26: Empfangslicht
- 26a: Empfangslicht
- 26b: Empfangslicht
- 26c: Empfangslicht
- 28: Lotrechte vom Sensor auf die Transportebene
- 30: Gerade

- α: Winkel des Sendelichtstrahlbündels zur Orthogonalen des Förderbands
- θ: Verschwenkwinkel
- Φ: Verschwenkwinkel

## Patentansprüche

1. Vorrichtung (10) zur Überwachung eines Transportprozesses mittels einer Fördervorrichtung (12), insbesondere eines Förderbands,
wobei die Vorrichtung zumindest einen optoelektronischen Sensor (20) und eine Steuer- und Auswerteeinheit (22) aufweist,
wobei der Sensor (20) dazu ausgebildet ist, Sendelicht (24) in Form zumindest eines Sendelichtstrahlbündels auszusenden und von einem Objekt (12, 16) in Richtung des Sensors (20) remittiertes oder reflektiertes Sendelicht als Empfangslicht (26) zu empfangen,
wobei die Steuer- und Auswerteeinheit (22) dazu ausgebildet ist, auf Basis des Empfangslichts (26) eine radiale Entfernung d_{rad} und eine Radialgeschwindigkeit v_{rad} des Objektes (12, 16) zu ermitteln, und wobei die Steuer- und Auswerteeinheit (22) dazu ausgebildet ist, mittels der Radialgeschwindigkeit v_{rad} und der radialen Entfernung d_{rad} des Objektes (12, 16) die orthogonale Entfernung dₒᵣₜₕ zwischen dem Sensor (20) und dem Objekt (12, 16) zu bestimmen.

2. Vorrichtung (10) nach Anspruch 1, wobei das Sendelichtstrahlbündel (24) einen nicht-orthogonalen Winkel α zu einer Förderrichtung (18) der Fördervorrichtung (12) bildet.

3. Vorrichtung (10) nach Anspruch 1 oder 2, wobei die Steuer- und Auswerteeinheit (22) dazu ausgebildet ist, auf Basis des Empfangslichts (26) gleichzeitig die Radialgeschwindigkeit v_{rad,obj} und die Dicke D_{obj} eines durch die Fördervorrichtung (12) geförderten Objektes (16) zu bestimmen.

4. Vorrichtung (10) nach einem der vorhergehenden Ansprüche, wobei der Sensor (20) ein Frequency-Modulated Continuous Wave, FMCW, LiDAR-Sensor, insbesondere 1D FMCW LiDAR Sensor, ist.

5. Vorrichtung (10) nach einem der Ansprüche 2 bis 4, wobei die Steuer- und Auswerteeinheit (22) dazu ausgebildet ist, die orthogonale Entfernung dₒᵣₜₕ des Objektes (12, 16) gemäß ${d}_{orth} = {d}_{rad} * sin \left(α\right) = {d}_{rad} * sin \left(arccos\left({v}_{rad}/v\right)\right)$ aus der radialen Entfernung d_{rad} des Objektes (12, 16), der Radialgeschwindigkeit v_{rad} des Objektes (16) und der Fördergeschwindigkeit v der Fördervorrichtung (12) zu bestimmen.

6. Vorrichtung (10) nach Anspruch 5, wobei die Vorrichtung (10) dazu ausgebildet ist, bei Inbetriebnahme der mit einer, insbesondere einstellbaren, Fördergeschwindigkeit v betriebenen Fördervorrichtung (12) eine Kalibrationsmessung durchzuführen, bei welcher mittels der ermittelten radialen Entfernung d_{rad,F} und der ermittelten Radialgeschwindigkeit v_{rad,F} einer Transportebene (14) der Fördervorrichtung (12) die orthogonale Entfernung d_{orth,F} der Transportebene (14) bestimmt wird, wobei während der Kalibrationsmessung durch die Fördervorrichtung (12) keine Objekte gefördert werden, insbesondere wobei die Steuer- und Auswerteeinheit (22) dazu ausgebildet ist, die Kalibrationsmessung nach der Inbetriebnahme der Fördervorrichtung (12) während des Normalbetriebs zu wiederholen, wobei während der Kalibrationsmessung keine Objekte durch die Fördervorrichtung (12) gefördert werden.

7. Vorrichtung (10) nach Anspruch 6, wobei die Steuer- und Auswerteeinheit (22) dazu ausgebildet ist, die radiale Entfernung d_{rad,obj} und die Radialgeschwindigkeit v_{rad,obj} eines durch die Fördervorrichtung (12) mit der Fördergeschwindigkeit v geförderten Objektes (16) zu ermitteln, aus den ermittelten Werten die orthogonale Entfernung d_{orth,obj} des Objektes (16) zu bestimmen und die Dicke D_{obj} des Objektes (16) gemäß D_{obj} = d_{orth,obj} - d_{orth,F} zu berechnen.

8. Vorrichtung(10) nach einem der vorhergehenden Ansprüche, wobei die Steuer- und Auswerteeinheit dazu ausgebildet ist, die Länge L_{obj} eines durch die Fördervorrichtung (12) mit der Fördergeschwindigkeit v geförderten Objektes (16) durch zeitliche Integration der ermittelten Radialgeschwindigkeitswerte v_{rad,obj} oder einer aus den ermittelten Radialgeschwindigkeitswerten v_{rad,obj} des Objektes (16) abgeleiteten Objektgeschwindigkeit _{Vobj} des Objektes (16) zu bestimmen.

9. Vorrichtung (10) nach einem der vorhergehenden Ansprüche, wobei die radialen Entfernungen und Radialgeschwindigkeiten jeweils einer Kombination von zeitlich hintereinander erfolgten diskreten Ermittlungen von radialer Entfernung und Radialgeschwindigkeit entsprechen.

10. Vorrichtung (10) nach einem der vorhergehenden Ansprüche, wobei die Steuer- und Auswerteeinheit (22) dazu ausgebildet ist, das Sendelichtstrahlbündel (24) des Sensors (20) orthogonal zu einer Transportebene (14) der der mit der Fördergeschwindigkeit v betriebenen Fördervorrichtung (12) auszurichten, indem der Sensor (20), insbesondere durch Verschwenken, zunächst derart ausgerichtet wird, dass die ermittelte Radialgeschwindigkeit v_{rad,F} der Transportebene (14) minimiert wird und der Sensor (20) danach derart ausgerichtet wird, dass die Radialgeschwindigkeit v_{rad,F} minimal bleibt und gleichzeitig der ermittelte radiale Abstand d_{rad,F} der Transportebene (14) minimiert wird.

11. Vorrichtung (10) nach einem der vorhergehenden Ansprüche, wobei der Sensor (20) dazu ausgebildet ist, Sendelicht in Form von zumindest zwei Sendelichtstrahlbündeln (24a, 24b) auszusenden, wobei sich die jeweiligen Winkel der Sendelichtstrahlbündel (24a, 24b) zu einer Förderrichtung (18) der Transportvorrichtung (12) unterscheiden.

12. Vorrichtung (10) nach Anspruch 11, wobei die Vorrichtung (10) dazu ausgebildet ist, Sendelicht in Form von zwei Sendelichtstrahlbündeln (24a, 24b) auszusenden und auf Basis des jeweiligen empfangenen Empfangslichts (26a, 26b) jeweilige radiale Entfernungen d1_{rad,F}, d2_{rad,F} und Radialgeschwindigkeiten v1_{rad,F}, v2_{rad,F} **einer** Transportebene (14) der mit der Fördergeschwindigkeit v betriebenen Fördervorrichtung (12) zu ermitteln und den Sensor (20) durch Verschwenken um eine im Wesentlichen senkrecht zur Transportebene (14) sich erstreckende Achse derart auszurichten, dass die Radialgeschwindigkeiten d1_{rad,F} und d2_{rad,F} maximiert oder minimiert werden und jeweiligen Maximalwerten v1_{rad,F,max} und v2_{rad,F,max} beziehungsweise Minimalwerten v1_{rad,F,min} und v2_{rad,F,min} entsprechen, wobei die Steuer- und Auswerteeinheit (22) dazu ausgebildet ist, die orthogonale Entfernung d_{orth,F} zu der Transportebene (14) unter Verwendung der den Radialgeschwindigkeiten v1_{rad,F,max} und v2_{rad,F,max} bzw. v1_{rad,F,min} und v2_{rad,F,min} zugehörigen radialen Entfernungen d1_{rad,F} und d2_{rad,F} **zur** Transportebene (14) zu berechnen.

13. Vorrichtung (10) nach Anspruch 11, wobei die Vorrichtung (10) dazu ausgebildet ist, Sendelicht in Form von drei Sendelichtstrahlbündeln (24a, 24b, 24c) auszusenden und auf Basis des jeweiligen ausgesendeten Sendelichtstrahlbündels (24a, 24b, 24c) und empfangenen Empfangslichts (26a, 26b, 26c) radiale Entfernungen d_{rad,F} und Radialgeschwindigkeiten v_{rad,F} einer Transportebene (14) der Fördervorrichtung (12) zu ermitteln, wobei die Steuer- und Auswerteeinheit (22) dazu ausgebildet ist, aus den drei ermittelten radialen Entfernungen d_{rad,F} der Transportebene (14) die Ausrichtung der Transportebene (14) im dreidimensionalen Raum und/oder deren Normalenvektor zu berechnen.

14. Vorrichtung (10) nach Anspruch 13, wobei die Steuer- und Auswerteeinheit (22) dazu ausgebildet ist, den orthogonalen Abstand d_{orth,F} des Sensors (20) von der Transportebene (14) und die Dicke D_{obj} eines geförderten Objektes (16) ausschließlich aus den ermittelten radialen Entfernungen des Sensors (20) zur Transportebene (14) und zum geförderten Objekt (16) zu berechnen.

15. Verfahren zur Überwachung eines Transportprozesses mittels einer Fördervorrichtung, insbesondere eines Förderbandes, durch eine Vorrichtung (10), wobei die Vorrichtung (10) zumindest einen optoelektronischen Sensor (20) und eine Steuer- und Auswerteeinheit (22) aufweist, wobei der Sensor (20) Sendelicht (24) in Form zumindest eines Sendelichtstrahlbündels aussendet und von einem Objekt (16) in Richtung des Sensors (20) remittiertes oder reflektiertes Sendelicht als Empfangslicht (26) empfängt, die Steuer- und Auswerteeinheit (22) auf Basis des Empfangslichts (26) eine radiale Entfernung d_{rad} und eine Radialgeschwindigkeit v_{rad} des Objektes (16) ermittelt, und wobei die Steuer- und Auswerteeinheit (22) mittels der Radialgeschwindigkeit v_{rad} und der radialen Entfernung d_{rad} des Objektes (16) die orthogonale Entfernung dₒᵣₜₕ zwischen dem Sensor (20) und dem Objekt (16) bestimmt.
